# EUROPÄISCHE PATENTSCHRIFT

(11) **EP 0 326 022 B1**
(45) Veröffentlichungstag und Bekanntmachung des Hinweises auf die Patenterteilung: **13.01.1993**
(21) Anmeldenummer: 89100884.9
(22) Anmeldetag: 19.01.1989
(51) Int. Cl.: G01F 11/06

(54) **Dispenser**
Dispensing device
Dispositif de dosage

(30) Priorität: 25.01.1988 DE 8800844 U
(43) Veröffentlichungstag der Anmeldung: 02.08.1989
(73) Patentinhaber: WALTER GRAF u. CO. GMBH & CO., D-97877 Wertheim (DE)
(72) Erfinder: Knödel, Erich, D-6980 Wertheim (DE)
(74) Vertreter: Jaeger, Klaus, Dr.

(56) Entgegenhaltungen:
- EP-A- 0 250 095
- DE-A- 2 830 014
- DE-A- 3 031 830
- DE-A- 3 516 596

## Beschreibung

Die Erfindung betrifft einen Dispenser bzw. ein Dosiergerät zum genauen Dosieren flüssiger Medien aus einem Vorratsbehälter in eine Vorlage.

Derartige Dispenser werden sowohl zum genauen Dosieren flüssiger Medien als auch zum Titrieren eingesetzt. Diese Geräte sind zum Dosieren von Volumina im Mikroliterbereich bis zum Literbereich ausgelegt.

Bereits bekannt sind Dosiergeräte, die eine Kolbenschieberdosierpumpe mit Glaszylinder besitzen. Der Dosierzylinder weist eine Graduierung auf, an der das aus dem Vorratsgefäß geförderte Volumen an flüssigem Medium abgelesen werden kann. Als Vorratsgefäß dient üblicherweise eine Flasche.

Dosiergeräte der hier in Rede stehenden Art dienen insbesondere dazu, eine gleichbleibende, vorher festgelegte Flüssigkeitsmenge mehrmals hintereinander abzugeben. Um dies zu erreichen, wird der Kolbenhub und somit das bei jeder Dosierung abzugebende Volumen auf eine bestimmte Höhe bzw. Menge eingestellt, beispielsweise dadurch, daß die Hubbegrenzung durch zwei Anschläge erzielt wird, nämlich einem feststehenden und einem veränderbaren Anschlag. Durch Einstellen des veränderbaren Anschlags wird auch der Hub des Kolbens begrenzt und somit eingestellt.

Ein derartiges Dosiergerät ist beispielsweise beschrieben in EU-A-831 01699.3 Bei diesem bekannten Dosiergerät ist der verstellbare Anschlag zwecks Veränderung der Hubbegrenzung in Umfangsrichtung dieses bekannten Dosiergeräts verdrehbar, während der feste Gegenanschlag als Stufenlehre ausgebildet ist. Durch Verdrehen des verstellbaren Anschlags kann die Hubbegrenzung verändert werden.

Bedingt durch die Ausbildung als Stufenlehre ist die Hubbegrenzung jedoch nur in großen Schritten veränderbar und einstellbar.

Auch aus der DE-A-28 30 014 ist ein Dosiergerät bzw. eine Pipette bekannt, bei dem bzw. bei der der Kolbenhub mit Hilfe von zwei Anschlägen begrenzt wird, wobei einer dieser Anschläge verstellbar ist, so daß die Länge des Kolbenhubes variiert werden kann. Der verstellbare Anschlag besitzt Keile bzw. Federn, die in Nuten eingreifen, welche in der Hülse in Längsrichtung verlaufend ausgenommen sind. Der verstellbare Anschlag stellt eine Mutter dar, die ein Außengewinde trägt, das mit einem Innengewinde zusammenwirkt, welches an der Innenfläche eines Mantels eingreift, der die Mutter und auch den Kolben umschließt. Durch Drehen der Hülse wird auch die Mutter gedreht und führt dabei eine Bewegung in Axialrichtung aus.

Es sind auch Dosiergeräte mit einstellbarer Hubbegrenzung bekannt, beispielsweise aus der DE-A-35 34 550, bei denen die dispensierte Menge an abzugebender bzw. anzusaugender Flüssigkeit mit Hilfe eines berührungsfrei abtastenden Meßsystems ermittelt wird.

Bei diesen bekannten Dispensern sind die Kolbenschieberdosierpumpe, das ggf. vorhandene Anschlagsystem zur Hubbegrenzung des Kolbens sowie das ggf. vorhandene Meßsystem entweder in einem Gehäuse untergebracht oder so ausgestaltet, daß einige der genannten Elemente außerhalb des Gehäuses für das Gerät angeordnet sind. Diese bekannten Dosiergeräte lassen sich somit nur schwer reinigen und sind aus ergonomischer Sicht nicht optimal gestaltet.

Angesichts dieses Standes der Technik ist es Aufgabe der vorliegenden Erfindung, ein Dosiergerät der genannten Art bereitzustellen, bei dem die Hubhöhe und somit das Hubvolumen der zu dosierenden Flüssigkeitsmenge möglichst einfach aber doch äußerst genau einstellbar ist und das auch bezüglich des eigentlichen Dispensiervorganges einfach bedienbar ist.

Gelöst wird diese Aufgabe durch einen Dispenser mit den Merkmalen des Anspruchs 1.

Der Zylinder des erfindungsgemäßen Dispensers ist auf dem ein Ansaugventil und ein Ablaufventil enthaltenden an sich bekannten Ventilkopf bzw. Ventilblock flüssigkeitsdicht gehaltert.

Im Zylinder ist ein Kolben verschiebbar geführt, der im eingeführten Zustand länger ist als der Zylinder und an seinem freien Ende drehfest mit dem Betätigungsknopf verbunden ist. Der Kolben ist für Reinigungszwecke aus dem Zylinder herausnehmbar.

Der erfindungsgemäße Dispenser zeichnet sich unter anderem dadurch aus, daß der genannte Betätigungsknopf mit einer zum Zylinder konzentrischen und um diesen außen umlaufenden und sowohl drehbaren als auch axial bewegbaren Gewindehülse derart verbunden ist, daß der Betätigungsknopf bezüglich der Gewindehülse frei drehbar ist, in axialer Richtung jedoch fixiert ist. Dabei kann der Betätigungsknopf mit der Gewindehülse mit Hilfe eines Verbindungselements kraft- oder forschlüssig und daher drehfest verbunden werden. Letztere drehfeste Verbindung ist jedoch lösbar.

Die Gewindehülse erstreckt sich zweckmäßigerweise über die gesamte Höhe des Zylinders und vorteilhafterweise in Form eines nachstehend beschriebenen Fortsatzes über diese hinaus. Die Gewindehülse ist auf ihrem Außenmantel mit einem Außengewinde ausgestattet, das sich zweckmäßigerweise über fast die gesamte Höhe der Gewindehülse erstreckt.

Bei dem verstellbaren Anschlag des erfindungsgemäßen Dispensers handelt es sich um eine Anschlagmutter, die konzentrisch zur Gewindehülse verläuft, letztere umgreift (ihre axiale Höhe macht z.B. 1/10 bis 1/3 der Länge des aus dem Ventilkopf ragenden Bereichs des Zylinders aus) und an der Innenmantelfläche ihrer Innenbohrung ein Innengewinde aufweist, das mit dem Außengewinde auf der Gewindehülse in Eingriff steht. Diese Anschlagmutter ist dreh- und rotationsfest geführt.

Durch Drehen der Gewindehülse mit Hilfe des damit über ein Verbindungselement drehfest verbindbaren Betätigungsknopfes wird die Anschlagmutter in axialer Richtung verschoben.

Die Anschlagmutter liegt zweckmäßigerweise fast an ihrem gesamten Umfang der Innenbohrung an der Gewindehülse an, so daß ein Verkippen des Systems beim Bewegen der Anschlagmutter ausgeschlossen wird.

Durch Ziehen des Betätigungsknopfes nach oben wird die Gewindehülse und damit auch die Anschlagmutter nach oben bewegt, und zwar so weit, bis die Anschlagmutter an einen am oberen Ende des erfindungsgemäßen Dispensers angebrachten Gegenanschlag in Anschlag kommt. Die Hubhöhe wird dabei durch die Position der Anschlagmutter in Bezug auf die Gewindehülse festgelegt. Je weiter unten sich die Anschlagmutter an der Gewindehülse befindet, desto größer ist der Hub und somit das mittels des Kolbens angesaugte Volumen der zu dispensierenden Flüssigkeit.

Das Außengewinde der Gewindehülse ist vorzugsweise mehrgängig, um die Höhe der Anschlagmutter bezüglich der Gewindehülse fein einjustieren zu können. Das genannte Gewinde kann ein Rundgewinde oder auch ein Trapezgewinde sein.

Zweckmäßigerweise ist das Gewinde derart ausgelegt, daß fünf Umdrehungen erforderlich sind, um die Anschlagmutter von ihrer unteren Position in ihre obere Position zu bewegen.

Die kraftschlüssige und somit drehfeste Verbindung zwischen dem ansonsten bezüglich der Gewindehülse frei drehbaren Betätigungsknopf und der Gewindehülse wird durch ein von außen andrückbares Verbindungselement ermöglicht. Bevorzugte Ausgestaltungen dieser Verbindung sind in den Unteransprüchen beschrieben.

Die rotationsfeste Führung der Anschlagmutter kann üblicher Art sein, beispielsweise ein Vorsprung, der in einer axialen Längsschiene bzw. Längsnut geführt ist.

Nach einer bevorzugten Ausführungsform ist der erfindungsgemäße Dispenser mit einem Meßsystem ausgestattet, das die jeweilige Position der Anschlagmutter anzeigt. Zweckmäßigerweise bringt man ein Meßsystem zur Anwendung, das beim Bewegen des Kolbens (und somit auch der Gewindehülse und der Anschlagmutter) elektronische Impulse erzeugt, registriert und verarbeitet. Es kann sich dabei z.B. um ein analoges Meßsystem handeln, beispielsweise ein kapazitives Meßsystem. Vorzugsweise handelt es sich jedoch um ein digitales Meßsystem, das nach Auswertung in einer elektronischen Auswerteschaltung das ermittelte Ergebnis auf einer digitalen Anzeigevorrichtung anzeigt.

Dieses Meßsystem weist vorzugsweise einen mit einem Glasmaßstab ausgestatteten Glasmaßstabsträger auf, der parallel zum Zylinder und zu Gewindehülse sowie seitlich davon angeordnet ist und sich durch einen in der Anschlagmutter, vorzugsweise in einem seitlichen Ansatz davon, ausgenommenen Durchbruch erstreckt und somit ein Verdrehen der Anschlagmutter sicherstellt. Der Glasmaßstab wird mit einem nachstehend näher beschriebenen Sensorkopf abgetastet.

Das Meßsystem ist zweckmäßigerweise mikroprozessorgesteuert und läßt eine Eichung des dispensierten Volumens mit Hilfe einer Analysenwaage zu. Dadurch ist es möglich, die Zahl der gemessenen Impulse über einen Korrekturfaktor, der eingerechnet wird, auf das tatsächlich dispensierte Volumen abzustimmen, wodurch gewährleistet wird, daß alle mechanischen Abweichungen des Kolben- und Zylinderdurchmessers ausgeschaltet werden.

Dieses Meßsystem ermöglicht zusammen mit der mechanischen Anschlageinstellmöglichkeit eine stufenlose und genaue Anschlageinstellung und somit eine genaue Einstellung des dispensierten Volumens.

Bedingt dadurch, daß der Glasmaßstabsträger durch den genannten Durchbruch in der Anschlagmutter geführt ist, stellt dieser Glasmaßstabsträger des Meßsystems gleichzeitig sicher, daß die Anschlagmutter beim Drehen der Gewindehülse nicht ebenfalls verdreht wird, sondern rotationsfest gehalten wird.

Eine besonders ergonomisch ausgestaltete und einfach bedienbare Ausführungsform des erfindungsgemäßen Dispensers zeichnet sich dadurch aus, daß der Zylinder und der Kolben (bilden zusammen eine Kolbenschieberdosierpumpe), das Anschlagsystem mit den dazugehörigen Teilen und das Meßsystem in einem Gehäuse angeordnet sind, das in etwa senkrecht angeordnet ist und zylindrische Form besitzt.

Der Ventilkopf, der üblicher Art ist und ein Ansaugventil und ein Ablaufventil enthält, befindet sich im unteren Bereich des Gehäuses und ist auf ein Vorratsgefäß aufsetzbar bzw. aufschraubbar.

In der axialen Verlängerung des Ventilkopfes nach oben sind der Zylinder, der darin verschiebbar geführte Kolben, das Anschlagsystem mit z.B.Anschlagmutter, Gewindehülse und Gegenanschlag, sowie mit dem Meßsystem untergebracht; nähere Einzelheiten sind nachstehend beschrieben.

Am freien Ende des Kolbens ist ein Betätigungsknopf drehfest damit verbunden, der den oberen Abschluß des erfindungsgemäßen Dispensers darstellt.

Die funktionellen Teile, welche für den eigentlichen Dispensiervorgang, für die Begrenzung der Hubhöhe des Kolbens und für die Registrierung bzw. Messung der Kolbenhöhe und somit des Hubvolumens erforderlich sind, sind somit zu einer funktionellen Gruppe zusammengefaßt, die im senkrechten zylindrischen (hohlzylindrischen) Gehäuseteil untergebracht sind.

Die Bedienungselemente, die Anzeigevorrichtung, beispielsweise ein LED- oder LCD-Display, die Stromversorgung und die Ausstoßkanüle sind in einem seitlichen Ansatz, nämlich einem Tüllenarm, zusammengefaßt. Bei einer bevorzugten Ausführungsform besitzt dieser seitliche Tüllenarm die Form eines flachen, liegenden, von der Waagerechten leicht nach unten geneigten Quaders. Mit der Bezeichnung "liegend" soll zum Ausdruck gebracht werden, daß eine der großen Seitenflächen des Quaders die untere Begrenzung des Tüllenarms darstellt. Die andere der großen Seitenflächen stellt die obere Begrenzung dar.

Aus dem freien Ende des Tüllenarms und somit einer Stirnfläche des Quaders ist die Ausstoßkanüle herausgeführt, die sich somit über diesen Tüllenarm hinaus erstreckt bzw. aus diesem herausragt und an ihrem freien Ende senkrecht nach unten gebogen ist. Die Ausstoßkanüle ist vorzugsweise in dem außenliegenden Bereich bis kurz vor dem Ende der Ausstoßkanüle durch eine steife Schutzhülse gehaltert, die beispielsweise aus einem geeigneten Kunststoff oder aus Stahl bestehen kann. Dadurch wird die Ausstoßkanüle unterstützt und stabilisiert, so daß ein Schnippen und Spritzen der dispensierten Flüssigkeit am Ausstoß verhindert wird.

Die Anzeigevorrichtung und die Bedienungselemente befinden sich im oberen Bereich des Tüllenarms und können daher nach ergonomischen Gesichtspunkten z.B. bei stehender Tätigkeit gut und bequem eingesehen bzw. bedient werden.

Das Gehäuse ist vorzugsweise aus zusammensetzbaren Segmentten aufgebaut. Das untere Segment umgreift den Ventilkopf, erstreckt sich auf der dem Tüllenarm abgewandten Seite bis zum unteren Bereich des Zylinders und umfaßt auch den unteren Abschnitt des Tüllenarms und der Schutzhülse der Ausstoßkanüle.

Das obere Segment stellt den oberen Teil des Hohlzylinders des Gehäuses dar und umschließt die oberen Abschnitte des Zylinders, der Gewindehülse und das Verbindungselement für den Betätigungsknopf/die Gewindehülse. In der seitlichen, zum Tüllenarm gewandten Seitenwand dieses oberen Segments befindet sich eine Ausnehmung, in der ein Bedienungsknopf sitzt. Durch Drücken auf diesen Bedienungsknopf wird das Verbindungselement kraftschlüssig sowohl gegen den Betätigungsknopf, insbesondere eine sich im unteren Bereich an diesen Betägigungsknopf anschließende Schürze, als auch gegen das obere Ende der Gewindehülse, gedrückt.

Das dritte Segment des Gehäuses stellt die obere Abdeckung des quaderförmigen Tüllenarms dar und erstreckt sich vom unteren tüllenarmseitigen Ende des oberen Segments bis zum Ende des Tüllenarms und darüber hinaus, so daß das dritte Segment auch einen Teil der Schutzhülse für die Ausstoßkanüle bildet. In diesem dritten Segment sind verschiedene Ausnehmungen vorgesehen, die zur Aufnahme eines Displays bzw. einer Anzeigevorrichtung und zur Aufnahme von Bedienungsknöpfen dienen.

Die Erfindung wird im folgenden anhand der in den Figuren gezeigten bevorzugten Ausführungsform des erfindungsgemäßen Dispensers näher erläutert.

Von den Figuren zeigen:
- Fig. 1: eine Zusammenstellungszeichnung im Längsschnitt;
- Fig. 2: im Halbschnitt einen Schnitt entlang der Linie A-A in Fig. 1 und eine Aufsicht von oben auf den erfindungsgemäßen Dispenser; und
- Fig. 3: einen Querschnitt durch die Anschlagmutter.

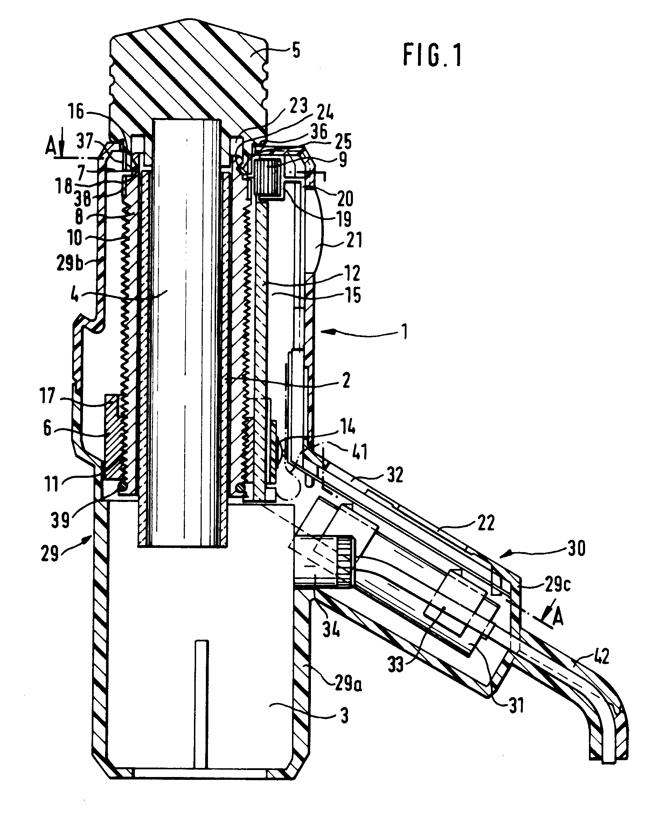

Der in der Fig. 1 gezeigte erfindungsgemäße Dispenser 1 besitzt einen Ventilkopf 3, der auf einen Vorratsbehälter, beispielsweise eine Flasche, aufgesetzt werden kann (nicht gezeigt). Der Ventilkopf 3 ist an sich bekannt und enthält ein Ansaugventil und ein Ablaufventil. Bei diesen Ventilen handelt es sich zweckmäßigerweise um schwerkraftbeaufschlagte Rubinkugel-Ventile. Der Ventilkopf ist zwechmäßigerweise aus PTFE hergestellt.

Seitlich ist im oberen Bereich des Ventilkopfs ein waagerechter Stutzen 34 angeordnet, aus dem die Ausstoßkanüle 33 herausgeführt ist.

Oben in den Ventilkopf 3 ist das untere Ende eines aus Glas hergestellten Zylinders 2 flüssigkeitsdicht eingesetzt. Im Zylinder 2 befindet sich ein verschiebbar angeordneter Kolben 4, der im vollständig eingeführten Zustand über das freie Ende des Zylinders 2 hinausragt. Der Kern des Kolbens besteht aus einem beidseitig offenen Rohr aus Glas, Keramik oder Metall, wobei das Rohr von einem einstückig aus Vollmaterial hergestellten PTFE-Mantel umkleidet ist.

Auf das obere Ende des Kolbens 4 ist ein Betätigungsknopf 5 aufgesetzt und fest damit verbunden. Durch Hochziehen des Betätigungsknopfes 5 wird auch der Kolben 4 hochgezogen, wodurch Flüssigkeit aus dem Vorratsbehälter in den Zylinder angesaugt wird. Beim Niederdrücken des Betätigungsknopfes 5 wird die hochgesaugte Flüssigkeit durch das Ablaufventil zur Ausstoßkanüle 33 und von dort in die Vorlage bewegt.

Der Betätigungsknopf 5 ist in etwa zylinderförmig. Sein Außendurchmesser verjüngt sich im unteren Bereich unter Ausbildung einer kreisförmigen Schulter 36, die beim Niederdrücken des Kolbens 4 gegen einen am oberen Ende des Gehäuses 29 angebrachten Anschlagwulst in Anschlag kommt, kurz bevor oder wenn der Kolben 4 seinen unteren Totpunkt erreicht. Die Schulter 36 und der Anschlagwulst sind so ausgestaltet, daß beim Drehen des Betätigungsknopfes 5 möglichst wenig Reibung entsteht.

Daran anschließend trägt der Betätigungsknopf 5 ventilkopfseitig eine zum Kolben 4 konzentrische und um den Kolben 4 im Abstand umlaufende Schürze 16, auf deren Außenmantelfläche eine axial verlaufende Zähnung 37 angeordnet ist.

Der Zylinder 2 ist auf fast dem ganzen außerhalb des Ventilkopfes 3 liegenden Bereichs von einer Gewindehülse 8 umgeben, die dazu konzentrisch ist und um diesen Zylinder außen umläuft, so daß sie drehbar und axial bewegbar ist. Ist der Kolben 4 vollständig in den Zylinder 2 eingeführt, dann erstreckt sich die Gewindehülse oben über den Zylinder 2 hinaus und unten fast bis zum Ventilkopf 3.

Die Gewindehülse 8 ist auf ihrem Außenmantel mit einem Außengewinde 10 ausgestattet, das sich bis fast zu beiden Enden der Gewindehülse erstreckt. Im Anschluß an den oberen Bereich des Außengewindes 10 ist auf dem Außenmantel der Gewindehülse 8 am oberen Ende eine zur Zähnung 37 auf der Schürze 16 korrespondierende Zähnung 38 angebracht.

Nach oben im Anschluß an die Zähnung 38 verjüngt sich der Außendurchmesser der Gewindehülse 8; sie erstreckt sich dann nach oben in Form eines zylindrischen Fortsatzes 18, der in eine im Betätigungsknopf 5 befindliche, ringförmige Nut 23 hineinragt.

Der zylindrische Fortsatz 18 besitzt auf seiner radial äußeren Seitenfläche eine radial umlaufende, V-förmige Rille 24, wobei die Spitze des V's nach radial einwärts zeigt. In diese Rille 24 ragen mehrere an der radial äußeren Seitenwand der Nut 23 angeordnete, nach radial innen zeigende kalottenartige Vorsprünge 25, die auf einem Umfangskreis verteilt sind. Die Vorsprünge 25 ragen dabei derart in die V-förmige Rille 24, daß der Betätigungsknopf 5 bezüglich der Gewindehülse 8 reibungslos oder fast reibungslos frei drehbar ist. Beim Ziehen des Betätigungsknopfes 5 nach oben jedoch kommen die kalottenförmigen Vorsprünge 25 gegen die obere Schrägfläche der V-förmigen Rille 24 in Anschlag und ziehen somit die Gewindehülse 8 mit nach oben.

Man kann die kalottenförmigen Vorsprünge 25 auch durch frei drehbare Kugeln ersetzen, die beispielsweise federbeaufschlagt sind und dadurch in die V-förmige Rille 24 gedrückt werden. Dadurch wird eine freie Drehbarkeit des Betätigungsknopfes 5 bezüglich der Gewindehülse 8 gewährleistet. Bei der letzteren Ausführungsform ist der zylindrische Fortsatz 18 zweckmäßigerweise weiter in den Betätigungsknopf 5 hineingeführt (in der Fig. 1 nicht gezeigt), so daß er über den Kolben 4 hinausragt (die Nut 23 muß dann entsprechend tiefer sein). Die V-förmige Rille ist dann zweckmäßigerweise auf der radial innenliegenden Seitenwand des zylindrischen Fortsatzes 18 angebracht und die Kugeln werden durch die genannte Feder von radial innen nach radial außen in die V-förmige Rille gedrückt.

Der Betätigungsknopf 5 und die Gewindehülse 8 sind so ausgestaltet, daß sich die Schürze 16 und das die Zähnung 38 tragende Ende der Gewindehülse 8 möglichst nahekommen.

Zur formschlüssigen und somit drehfesten Verbindung des Betätigungsknopfes 5 mit der Gewindehülse 8 ist ein Zahnradzylinder 9 vorgesehen, der achsparallel zum Kolben 4 und seitlich vom Betätigungsknopf 5 bzw. der Gewindehülse 8 derart angeordnet ist, daß er gleichzeitig sowohl gegen die Zähnung 37 auf der Schürze 16 als auch gegen die Zähnung 38 am oberen Ende der Gewindehülse 8 angedrückt werden kann. Die Zähnung 37 kämmt somit über den Zahnradzylinder 9 mit der Zähnung 38, wenn der Zylinder 9 angepreßt wird.

Der Zahnradzylinder 9 ist an seinen beiden Stirnflächen drehbar durch eine Gabel 19 gehaltert, die über einen Bügel 20 am Gehäuse 29 befestigt ist. Bei dem Bügel 20 handelt es sich um ein elastisches Material, das an dem der Gabel 19 gegenüberliegenden Ende am Gehäuse 29 befestigt ist, wodurch der Zahnradzylinder 9 federnd gehaltert ist. Durch Drücken auf den mit dem Bügel 20 verbundenen Bedienungsknopf 21 wird der Zahnradzylinder 9 gegen die wirkende Federkraft mit den Zähnungen 37 und 38 in Eingriff gebracht. Im Ruhezustand befindet sich der Zahnradzylinder 9 nicht in Eingriff, so daß kein versehentliches Verstellen möglich ist.

Natürlich kann der Zahnradzylinder 9 auch durch ein eine Kraftschlüssigkeit zwischen dem Betätigungsknopf 5 und der Gewindehülse 8 sicherstellendes Verbindungselement, beispielsweise ein Reibrad, ersetzt werden. In diesem Fall ist auch eine Zähnung nicht unbedingt erforderlich.

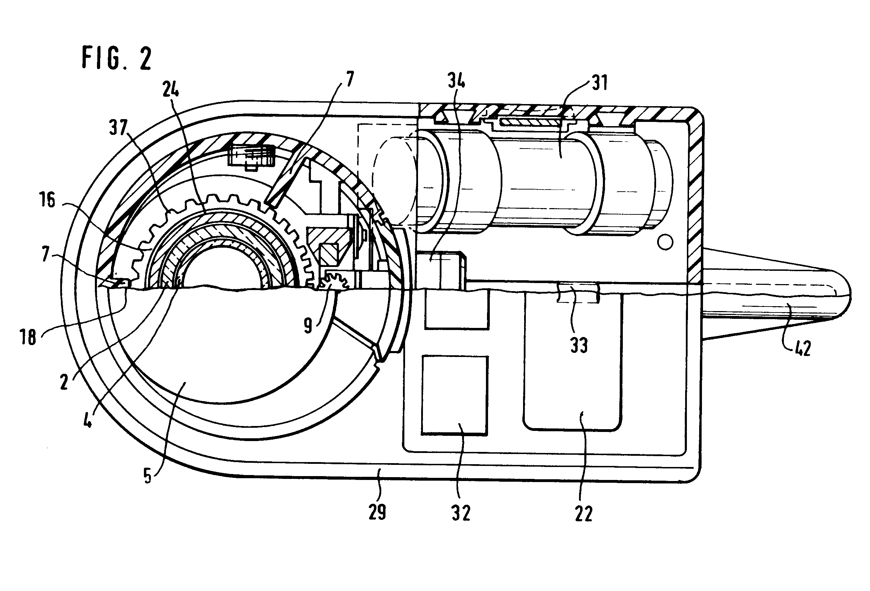

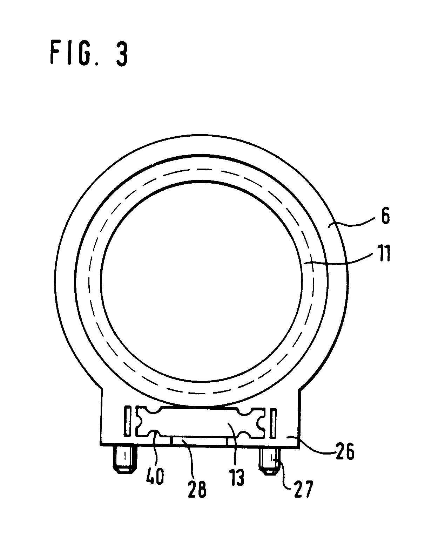

Der verstellbare Anschlag des erfindungsgemäßen Dispensers besteht aus einer Anschlagmutter 6, die zur Gewindehülse 8 konzentrisch und um diese umlaufend ist. In der Innenwand der Innenbohrung der Anschlagmutter 6 befindet sich ein Innengewinde 11 (man vergleiche auch Fig. 3), das mit dem Außengewinde 10 in Eingriff ist und entsprechend ausgelegt ist. Die Anschlagmutter 6 ist rotations- und drehfest geführt und wird durch Verdrehen der Gewindehülse 8 in axialer Richtung verstellt. Zum Verdrehen der Gewindehülse 8 drückt der Benutzer auf den Bedienungsknopf 21, wie oben beschrieben, und dreht dann den Betätigungsknopf 5. Bedingt dadurch, daß das Außengewinde/Innengewinde 10/11 mehrgängig ist, läßt sich die Höhe der Anschlagmutter 6 bezüglich der Gewindehülse 8 äußerst fein einstellen. Je höher die Anschlagmutter 6 bezüglich der Gewindehülse 8 "verstellt" wird, desto geringer ist der beim Herausziehen des Kolbens 4 möglich Hub, denn die Gewindehülse 8 kommt umso eher gegen den Gegenanschlag 7 (man vergleiche auch Fig. 2), je höher sie sich an der Gewindehülse 8 befindet. Um ein Herausdrehen der Anschlagmutter 6 nach unten zu verhindern, ist am unteren Ende der Gewindehülse 8 ein außen radial umlaufender O-Ring 39 angebracht.

Der obere Bereich der Anschlagmutter 6 besitzt kein Innengewinde, sondern bildet einen die Gewindehülse 8 nicht berührenden Ringzylinder, dessen obere Randfläche im hochgeführten Zustand den Gegenanschlag 7 berührt.

Die zylindrische Anschlagmutter 6 besitzt einen seitlichen Ansatz 26 mit einem axialen Durchbruch 13 mit im wesentlichen rechteckigem Querschnitt. Seitlich am Ansatz 26 befinden sich zwei Nippel 27, mit deren Hilfe ein Sensorkopf 14 daran befestigt werden kann.

Durch den Durchbruch 13 verläuft ein Glasmaßstabsträger 12, der parallel zur Gewindehülse 8 geführt ist und sich im wesentlichen über den Bereich erstreckt, über den auch das Außengewinde 10 auf der Gewindehülse 8 verläuft. Durch diesen Glasmaßstabsträger wird ein Verdrehen der Anschlagmutter 6 verhindert. Der Querschnitt des Glasmaßstabsträgers 12 entspricht im wesentlichen dem Durchbruch 13, und ist derart gewählt, daß die axiale Verstellung der Anschlagmutter 6 nicht beeinträchtigt wird. Zu diesem Zwecke sind an den Innenwänden des Durchbruchs 13 axial verlaufende Führungsrippen 40 und am Glasmaßstabsträger korrespondierende Führungsrillen (nicht gezeigt) vorhanden.

Der auf dem Glasmaßstabsträger 12 angebrachte Glasmaßstab wird vom Sensorkopf 14 durch das Fenster 28 zum Durchbruch 13 berührungsfrei abgetastet. Der Sensorkopf 14 weist ein Abtastelement mit Nonius, einen Sender und einen Empfänger auf. Zur Ermittlung der Hubhöhe und somit des Hubvolumens tastet der nach dem Lichtschrankenprinzip arbeitende Sensorkopf die Graduierung auf dem Glasmaßstab des Glasmaßstabsträgers ab.

Mit dem erfindungsgemäßen Dispenser 1 ist somit eine stufenlose Höhenverstellung des Anschlags 6 bei gleichzeitiger Erfassung der Wegveränderung möglich.

Die dem Sensorkopf nachgeschaltete Auswerteschaltung (beispielsweise Mikroprozessor) ist derart ausgelegt, daß sie die jeweilige aktuelle Anschlagposition und während des Dispensierens den aktuellen Füllstand oder die dispensierte Menge anzeigt.

Der Sensorkopf 14 ist über ein Flachbandkabel 41 mit Bedienungselementen 32 und einer digitalen Anzeigevorrichtung 22 elektrisch verbunden.

Die Anzeigevorrichtung 22 und die Bedienungselemente 32 sind auf der Oberseite eines Tüllenarms 30 angebracht, der die Form eines flachen, liegenden, bezüglich der Horizontalen leicht nach unten geneigten Quaders besitzt. In diesem Tüllenarm 30 sind auch Batterien 31 untergebracht.

Die ebenfalls im seitlichen Tüllenarm 30 verlaufende Ausstoßkanüle 33 verläuft außerhalb des Tüllenarms in einer steifen Schutzhülse 42.

Das Gehäuse 29 des erfindungsgemäßen Dispensers besteht aus drei Gehäusesegmenten 29a,29b,29c. Das untere Gehäusesegment 29a umschließt den Ventilkopf 3 und ragt auf der dem Tüllenarm 30 abgewandten Seite über diesen Ventilkopf 3 hinaus. Tüllenarmseitig ist der untere Bereich des Tüllenarms 30 sowie der Schutzhülse 42 an den den Ventilkopf 3 umschließenden Bereich angeformt.

Das obere Gehäusesegment 29b umschließt den oberen Bereich des Zylinders 2,des Glasmaßstabsträgers 12 und den Zahnradzylinder 9. Der Gegenanschlag 7 ist im oberen Bereich an dieses Gehäusesegment 29b innen angeformt. Insgesamt sind drei Gegenanschläge 7 vorhanden, die sich von der Innenwand des Gehäusesegments 29b nach radial innen stegförmig bis kurz vor die Schürze 16 erstrecken. Oben im Gehäusesegment 29c befindet sich eine Öffnung, die derart bemessen ist, daß die Gewindehülse 8 herausgezogen werden kann, bis die Anschlagmutter 6 gegen den Gegenanschlag 7 in Anschlag kommt.

Das Gehäusesegment 29c erstreckt sich somit vom tüllenarmseitigen unteren Ende des Gehäusesegments 29b bis zur Stirnseite des flachen Quaders und darüber hinaus, so daß auch der obere Bereich der sich an den Tüllenarm anschliessenden, bis etwa zur Abbiegung nach unten reichende Bereich der Schutzhülse 42 von diesem Gehäusesegment 29c gebildet wird.

Aufgrund dieses Segmentaufbaus kann mann das Gehäuse auseinandernehmen und Reinigungsarbeiten oder Sterilisationsarbeiten bequem vornehmen. So kann man den Betätigungsknopf 5 zusammen mit dem Kolben 4 vollständig aus dem Zylinder 2 entfernen. Aufgrund der schnappverschlußartigen Verbindung zwischen der Schürze 16 über die kalottenartigen Vorsprünge 25 mit dem zylindrischen Fortsatz 18 der Gewindehülse 8 kann man auch den Betätigungsknopf 5 von der Gewindehülse 8 abtrennen. Danach kann man das obere Gehäusesegment 29b und auch das Gehäusesegment 29c entfernen, so daß der Ventilkopf 3 aus dem unteren Gehäusesegment 29a entnommen werden kann.

Das Gehäuse kann aus Metall oder einem geeigneten Kunststoffmaterial gefertigt sein.

## Patentansprüche

1. Dispenser bzw. Dosiergerät zum genauen Dosieren flüssiger Medien aus einem Vorratsbehälter in eine Vorlage mit einem Zylinder (2), der von einem ein Ansaugventil und ein Ablaufventil enthaltenden, mit dem Vorratsbehälter verbindbaren ventilkopf (3) flüssigkeitschicht gehalteit ist,
einem im Zylinder (2) verschiebbar geführten Kolben (4), der an seinem vom Ventilkopf (3) entfernten Ende fest mit einem Betätigungsknopf (5) verbunden ist und
einem zwecks Veränderung der Hubbegrenzung des Kolbens (4) verstellbaren Anschlag (6) sowie einem damit zusammenwirkenden, im oberen Bereich des Dispensers (1) angeordneten Gegenanschlag (7),
**gekennzeichnet** durch
eine drehbare und axial bewegbare Gewindehülse (8),
die zum Zylinder (2) konzentrisch ist und diesen außen umläuft,
die mit dem Betätigungsknopf (5) in axialer Richtung fest verbunden ist, wobei der Betätigungsknopf (5) jedoch bezüglich dieser Gewindehülse (8) frei drehbar ist,
die auf ihrem Außenmantel mit einem Außengewinde (10) ausgestattet ist und
die den verstellbaren Anschlag (6) trägt, der eine rotationsfeste und zur Gewindehülse (8) konzentrische Anschlagmutter (6) ist, die an der Innenmantelfläche ihrer Innenbohrung ein Innengewinde (11) aufweist, das mit dem Außengewinde (10) der Gewindehülse (8) in Eingriff steht, und
durch ein Verbindungselement (9), das bei Betätigung den Betätigungsknopf (5) drehfest mit der Gewindehülse (8) verbindet, so daß beim Drehen des Betätigungsknopfes (5) und somit auch der Gewindehülse (8) die Anschlagmutter (6) in axialer Richtung verschoben wird.

2. Dispenser nach Anspruch 1,
**gekennzeichnet** durch
ein Meßsystem, das die jeweilige Position der Anschlagmutter (6) anzeigt.

3. Dispenser nach Anspruch 2,
dadurch **gekennzeichnet**,
daß das Meßsystem beim Bewegen des Kolbens elektronische Impulse erzeugt und registriert und nach Auswertung in einer elektronischen Auswerteschaltung auf einer insbesondere digitalen Anzeigevorrichtung (22) zur Anzeige bringt.

4. Dispenser nach Anspruch 3,
dadurch **gekennzeichnet**,
daß das Meßsystem einen mit einem Glasmaßstab ausgestatteten Glasmaßstabsträger (12) aufweist, der parallel zum Zylinder (2) und zur Gewindehülse (8) sowie seitlich davon angeordnet ist und sich durch einen in der Anschlagmutter (6) ausgenommenen Durchbruch (13) erstreckt und daß an der Anschlagmutter (6) ein Sensorkopf (14) zum berührungsfreien Abtasten des Glasmaßstabs auf dem Glasmaßstabsträger (12) befestigt ist.

5. Dispenser nach Anspruch 4,
dadurch **gekennzeichnet**,
daß der Durchbruch (13) in einem seitlichen Ansatz (26) der Anschlagmutter (6) angeordnet ist und im wesentlichen rechteckigen Querschnitt besitzt, wobei eine der großen Seiten des rechteckigen Querschnitts tangential zum Innengewinde (11) verläuft.

6. Dispenser nach Anspruch 5,
dadurch **gekennzeichnet**,
daß an dem seitlichen Ansatz (26) mindestens ein Nippel (27) zur Befestigung des Sensorkopfes (14) angebracht ist und daß in der Außenwand des Ansatzes (26) ein Fenster (28) zum Durchbruch (13) angeordnet ist.

7. Dispenser nach einem der vorhergehenden Ansprüche,
dadurch **gekennzeichnet**,
daß das Verbindungselement (9) von radial außen, insbesondere gegen eine nach außen wirkende Federkraft, sowohl gegen den Betätigungsknopf (5) als auch gegen die Gewindehülse (8) unter Herstellung einer kraft- oder formschlüssigen Verbindung andrückbar ist.

8. Dispenser nach Anspruch 7,
dadurch **gekennzeichnet**,
daß der Betätigungsknopf (5) ventilkopfseitig eine zum Kolben (4) konzentrische und umlaufende Schürze (16) aufweist, die auf ihrer Außenmantelfläche eine axial verlaufende Zähnung (37) besitzt,
daß die Gewindehülse (8) in dem axial an die Schürze (16) angrenzenden Ende den gleichen Außendurchmesser besitzt wie die Schürze (16) und auf ihrem Außenmantel ebenfalls eine axial verlaufende Zähnung besitzt und
daß das Verbindungselement (9) ein Zahnradzylinder (9) mit einer axial verlaufenden Zähnung ist, dessen Längsachse achsparallel zum Kolben (4) angeordnet ist und der um diese Längsachse drehbar gelagert ist.

9. Dispenser nach Anspruch 8,
dadurch **gekennzeichnet**,
daß der Zahnradzylinder (9) an seinen beiden Stirnflächen durch eine Gabel (19) drehbar gehaltert ist, die über einen in radialer Richtung beweglichen Bügel (20) mit einem Bedienungsknopf (21) verbunden ist.

10. Dispenser nach einem der vorhergehenden Ansprüche,
dadurch **gekennzeichnet**,
daß die Gewindehülse (8) an dem zum Betätigungsknopf (5) zeigenden Ende einen zylindrischen Fortsatz (18) mit gleichem Innendurchmesser, jedoch geringerem Außendurchmesser besitzt, der in eine im Betätigungsknopf (5) befindliche, ringförmige Nut (23) hineinragt, und mit Hilfe dieses Fortsatzes mit der Gewindehülse (8) in axialer Richtung fest verbunden ist, wobei der Fortsatz (18) bezüglich des Betätigungsknopfes (5) reibungsfrei oder fast reibungsfrei drehbar ist.

11. Dispenser nach Anspruch 10,
dadurch **gekennzeichnet**,
daß der zylindrische Fortsatz (18) eine radial umlaufende Rille, insbesondere eine V-förmige Rille, besitzt, in die mehrere kalottenartige Vorsprünge (25) hineinragen, die auf einem Umfangskreis verteilt und der Rille (24) gegenüberliegend entweder auf der radial außenliegenden oder der radial innenliegenden Seitenwand der Nut (23) angeordnet sind.

12. Dispenser nach einem der vorhergehenden Ansprüche,
dadurch **gekennzeichnet**,
daß der Zylinder (2), der Kolben (4), der Anschlag (6), die Gewindehülse (8) und gegebenenfalls das Meßsystem (12,14,15) in einem senkrechten Gehäuse (29) zumindest im wesentlichen zylindrischer Form angeordnet sind,
daß seitlich an dem Gehäuse (29) ein Tüllenarm (30) angebracht ist, in dem gegebenenfalls die Anzeigevorrichtung (22) und Bedienungselemente (32) angeordnet sind, und
daß eine Ausstoßkanüle durch den Tüllenarm (30) hindurchgeführt ist und aus diesem heraustritt.

13. Dispenser nach Anspruch 12,
dadurch **gekennzeichnet**,
daß der Tüllenarm (30) im wesentlichen die Form eines flachen, liegenden Quaders besitzt, der bezüglich der Normalen zum Gehäuse (29) leicht zum Ventilkopf (3) geneigt ist.

14. Dispenser nach Anspruch 12 oder 13,
dadurch **gekennzeichnet**,
daß die Bedienungselemente (32) und die Anzeigevorrichtung (22) auf der vom Ventilkopf (3) abgewandten Seite des Tüllenarms (30) angeordnet sind und daß im Tüllenarm (30) gegebenenfalls auch eine Spannungsquelle (31) für das Meßsystem angeordnet ist.

15. Dispenser nach einem der Ansprüche 12 bis 14,
dadurch **gekennzeichnet**,
daß die Ausstoßkanüle (33) aus der vom zylindrischen Gehäuse (29) abgewandten Quaderseite herausgeführt ist und außerhalb des Tüllenarms (30) in einer steifen, anliegenden Schutzhülse geführt und gestützt ist, die an ihrem freien Ende zum Ventilkopf (3) zeigend derart abgebogen ist, daß sie parallel mit dem Gehäuse (29) verläuft.

## Claims

1. A dispenser or dosing device for accurate dosing of fluid media from a storage container into a receiver comprising a cylinder (2) supported hermetically by a valve head (3), which is provided with a suction and a discharge valve and interconnectable to the storage container, a piston (4) guided slidably in the cylinder (2) and connected at its end remote from the valve head (3) with an actuating button (5) and an adjustable stop (6) for varying the stroke delimitation of the piston (4), as well as, a counter-stop (7) which is arranged in the upper portion of the dispenser (1) and co-operates with the stop (6),
**characterized** by
a rotatable and axially movable threaded sleeve (8),
which surrounds concentrically the cylinder (2),
is rigidly interconnected with the actuating button (5) in the axial direction, whereby the actuating button (5) is freely rotatable with respect to the threaded sleeve (8), which is provided on its outer surface with an outer thread (10) and supports the adjustable stop (6) in the form of a concentric, rotationally constrained stop nut (6), which is provided on the inner surface of its bore with an inner thread (11) engaging the outer thread (10) of the threaded sleeve (8),
and by
an interconnecting element (9), which on actuation interconnects the actuating button (5) rigidly with the threaded sleeve (8) such that on rotation of the actuating button (5) and thereby also of the threaded sleeve the stop nut (6) is displaced in axial direction.

2. A dispenser according to claim 1,
**characterized** by
a measuring system which indicates the instantaneous position of the stop nut (6).

3. A dispenser according to claim 2,
**characterized** in that
during movement of the piston the measuring system generates and registers electronic pulses and after their evaluation in an electronic evaluation circuitry displays the signals, in particular, on a digital display device (22).

4. A dispenser according to claim 3,
**characterized** in that
the measuring system comprises a glass scale support (12) which is provided with a glass scale and arranged parallel to the cylinder (2) and the threaded sleeve (8), as well as, laterally thereof, the support extending through an opening (13) in the stop nut (6) on which is mounted a sensor head (14) for contactless scanning of the glass scale on the glass scale support (12).

5. A dispenser according to claim 4,
**characterized** in that
the opening (13) is arranged in a lateral boss (26) of the stop nut (6), the boss having a substantially rectangular cross-section, whereby one of the large sides of the rectangular cross-section is disposed tangentially to the inner thread (11).

6. A dispenser according to claim 5,
**characterized** in that
the lateral boss (26) is provided with at least one nipple (27) for attachment of the sensor head (14) and that a window (28) which faces the opening (13) is arranged in an outer wall of the boss (26).

7. A dispenser according to one of the preceding claims,
**characterized** in that
on establishing a frictional or form-fit connection the interconnecting element (9) is pressed radially inwardly, especially against a radially outwardly acting spring force, against both the actuating button (5) and the threaded sleeve (8).

8. A dispenser according to claim 7,
**characterized** in that
the actuating button (5) is provided on the end facing the valve head with a skirt (16) which surrounds the piston (4) concentrically and its outer surface is provided with an axially extending serration (37),
that the end of the threaded sleeve (8), adjoining the skirt (16), has the same outer diameter as the skirt (16) and the outer surface of the threaded sleeve is also provided with an axially extending serration and
that the interconnecting element (9) is a cylindrical pinion (9) provided with an axially extending serration and whose longitudinal axis is arranged parallel to the piston (4) and journalled rotatably about the longitudinal axis.

9. A dispenser according to claim 8,
**characterized** in that
the cylindrical pinion (9) is supported rotatably at both ends thereof by a fork (19) which is interconnected with an actuating button (21) through the intermediary of a radially movable yoke (20).

10. A dispenser according to one of the preceding claims,
**characterized** in that
the threaded sleeve (8) is provided on its end facing the actuating button (5) with a cylindrical extension (18) which has the same inner diameter but smaller outer diameter and projects into an annular groove (23) on the actuating button (5), and with the aid of this extension is interconnected with the threaded sleeve (8) rigidly in an axial direction, whereby the extension (18) is rotatable frictionlessly or almost frictionlessly with respect to the actuating button (5).

11. A dispenser according to claiam 10,
**characterized** in that
the cylindrical extension (18) is provided with a circumferential groove (24), in particular a V-shaped groove, into which projects a plurality of part-spherical projections (25) spaced on a circumference and arranged opposite the groove (24) either on the radially outer or radially inner side wall of the groove (23).

12. A dispenser according to one of the preceding claims,
**characterized** in that
the cylinder (2), the piston (4), the stop (6), the threaded sleeve (8) and, if present, the measuring system (12,14,15) are arranged in a vertical housing (29) having a substantially cylindrical shape,
that a socket arm (30) in which, if present, are arranged the display device (22) and actuating elements (32), is mounted laterally on the housing (29), and
that a discharge tube is passed through the socket arm (30) and exits therefrom.

13. A dispenser according to claim 12,
**characterized** in that socket arm (30) has the shape of a substantially flat, lying parallelepiped, which, with respect to the perpendicular, is slightly inclined towards the valve head (3).

14. A dispenser according to claim 12 or 13,
**characterized** in that
the actuating elements (32) and the display device (22) are arranged on the side of the socket arm (30) opposite the valve head (3) and that in the arm (30) is also arranged the voltage source (31) for the measuring system, if present.

15. A dispenser according to one of the claims 12 to 14,
**characterized** in that
the discharge tube (33) is led out from the side of the parallelepiped which faces away from the housing (29) and outside the socket arm (30) is supported by and guided in a stiff, adjoining protective sleeve (42) and in that at its free end it is bent in the direction of the valve head (3) such that it extends parallel to the housing (29).

## Revendications

1. Distributeur ou appareil de dosage pour doser exactement des produits liquides, provenant d'un récipient de stockage, dans un collecteur comportant un cylindre (2), qui est maintenu par une tête de soupape (3) pouvant être reliée au récipient de stockage et comportant une soupape d'aspiration et une soupape de sortie, un piston (4) pouvant se déplacer, guidé dans le cylindre (2), qui est raccordé de façon fixe à un bouton d'actionnement (5) à son extrémité opposée à la tête de soupape (3), et une butée (6) réglable pour modifier la limite de course du piston, ainsi qu'une contre-butée (7) disposée dans la zone supérieure du distributeur (1) et agissant avec la précédente,
caractérisé par
- une douille filetée (8), mobile axialement et en rotation,
qui est concentrique avec le cylindre (2) et entoure ce dernier extérieurement,
qui est reliée de façon fixe avec le bouton d'actionnement (5) dans la direction axiale, mais étant entendu que le bouton d'actionnement (5) peut toutefois être tourne librement par rapport à cette douille filetée (8),
qui est réalisée avec un filetage extérieur (10) sur sa surface externe, et
qui porte la butée réglable (6), qui est un écrou de butée (6) fixe en rotation et concentrique avec la douille filetée (8), cet écrou présentant, sur la surface intérieure de son alésage intérieur, un filetage intérieur (11), qui fait prise sur l'alésage extérieur (10) de la douille filetée (8),
- et par un organe de liaison (9), qui, lors de l'actionnement, relie, sans possibilité de rotation, le bouton d'actionnement (5) avec la douille filetée (8), de telle façon que, si on tourne le bouton d'actionnement (5), et avec lui également la douille filetée (8), on fait déplacer l'écrou fileté (6) suivant la direction axiale.

2. Distributeur suivant la revendication 1, caractérisé par un système de mesure indiquant chaque position correspondante de l'écrou de butée (6).

3. Distributeur suivant la revendication 2, caractérisé en ce que le système de mesure fournit, lors du déplacement du piston, des impulsions électroniques et les enregistre, et, après exploitation dans un circuit d'interprétation, les reporte sur un dispositif formant écran (22), en particulier, un écran numérique.

4. Distributeur suivant la revendication 3, caractérisé en ce que le système de mesure présente un support d'échelle de mesure (12) comportant une échelle de mesure en verre, support qui est disposé sur le côté et parallèlement au cylindre (2) et à la douille filetée (8), et qui passe au travers d'une ouverture traversante (13) dans l'écrou de butée (6), et en ce que, sur l'écrou de butée (6), est fixée une tête de capteur (14) pour lire, sans contact, l'échelle de mesure en verre située sur le support (12) de l'échelle de mesure en verre.

5. Distributeur suivant la revendication 4, caractérisé en ce que l'ouverture (13) est disposée dans un prolongement latéral (26) de l'écrou de butée (6) et présente essentiellement une section rectangulaire, étant entendu que l'un des grands côtés de la section rectangulaire est disposée tangentiellement au filetage intérieur (11).

6. Distributeur suivant la revendication 5, caractérise en ce que, sur le prolongement latéral (26), est rapporté au moins un ergot (27) pour fixer la tête de capteur (14), et en ce que, dans la paroi extérieure du prolongement latéral (26), est dispose une fenêtre (28) allant vers l'ouverture (13).

7. Distributeur suivant l'une quelconque des revendications précédentes, caractérisé en ce qu'on peut, en particulier en repoussant un ressort agissant vers l'extérieur, appliquer radialement depuis l'extérieur l'organe de raccordement (9) aussi bien contre le bouton d'actionnement (5) qu'également contre la douille filetée (8), en réalisant une liaison à engagement géométrique ou dynamique, .

8. Distributeur suivant la revendication 7, caractérisé
- en ce que le bouton d'actionnement (5) présente, du côté de la tête de soupape, une bavette (16) qui entoure le piston (4) et est concentrique avec lui, qui possède, sur sa surface externe, une denture (37) disposée axialement
- en ce que la douille filetée (8), à son extrémité se terminant axialement sur la bavette (16), présente le même diamètre extérieur que la bavette (16), et présente, de même, sur sa surface externe une denture dirigée axialement, et
- en ce que l'organe de raccordement (9) est un cylindre denté (9) qui comporte une denture dirigée axialement, et dont l'axe longitudinal est parallèle à l'axe du piston (4), et qui est monté tournant autour de cet axe longitudinal.

9. Distributeur suivant la revendication 8, caractérisé en ce que le cylindre denté (9) est maintenu tournant sur ses deux surfaces d'extrémité, au moyen d'une fourche (19), qui est reliée à un bouton d'actionnement (21) par l'intermédiaire d'un étrier (20), mobile en direction axiale.

10. Distributeur suivant l'une quelconque des revendications précédentes, caractérisé en ce que la douille filetée (8) présente, à son extrémité tournée vers le bouton d'actionnement (5), un prolongement cylindrique (18) comportant le même diamètre intérieur, mais toutefois un diamètre extérieur plus faible, prolongement qui s'engage dans une rainure annulaire (23) se trouvant dans le bouton d'actionnement (5) et qui, au moyen de ce prolongement, est relie solidairement avec la douille filetée (8) de façon à être fixe dans la direction axiale, le prolongement (18) pouvant tourner, par rapport au bouton d'actionnement (5), sans frottement, ou presque sans frottement.

11. Distributeur suivant la revendication 10, caractérisé en ce que le prolongement cylindrique (18) présente une gorge circulaire radiale, en particulier une gorge en forme de V, dans laquelle pénètrent plusieurs saillies en forme de calotte (25), réparties sur la périphérie et disposées en face de la gorge (24), sur la paroi latérale de la rainure (23), soit du côté extérieur radialement, soit du côté intérieur radialement.

12. Distributeur suivant l'une quelconque des revendications précédentes, caractérisé en ce que le cylindre (2), le piston (4), la butée (6), la buse filetée (8) et, le cas échéant, le système de mesure (12, 14, 15) sont disposes dans un boîtier vertical (29), de forme au moins essentiellement cylindrique, en ce que, sur le côté du boîtier (29), est rapporte un bras verseur (30), dans lequel, le cas écheant, le dispositif indicateur (30) et les organes de commande (32) sont disposés, et en ce qu'une canule éjectrice passe au travers du bras verseur et sort de ce dernier.

13. Distributeur suivant la revendication 12, caractérisé en ce que le bras verseur (30) présente essentiellement la forme d'un quadrilatère plat horizontal, qui, par rapport à la normale au boîtier (29), est légèrement incliné vers la tête de soupape (3).

14. Distributeur suivant la revendication 12 ou la revendication 13, caractérisé en ce que les organes d'actionnement (32) et le dispositif indicateur (30) sont disposés sur le côté du bras verseur (30) et en ce que, dans le bras verseur (30), est disposé, le cas échéant, également une source de tension (31) pour le système de mesure.

15. Distributeur suivant l'une quelconque des revendications 12 à 14, caractérisé en ce que la canule éjectrice (33) sort par le côté du quadrilatère opposé au boîtier cylindrique (29) et est guidée et protégée, à l'extérieur du bras verseur (30), dans une douille de protection rigide, placée contre, qui, à son extrémité libre, du côté tourne vers la tête de soupape (3), est recourbée de façon à être dirigée parallèlement au boîtier (29).
